# EUROPEAN PATENT APPLICATION

(11) **EP 4 801 196 A1**
(43) Date of publication of application: **02.09.2026**
(21) Application number: 24904184.9
(22) Date of filing: 06.12.2024
(51) Int. Cl.: H05B 7/09, C04B 35/52, C04B 35/622, C04B 35/628

(54) **ELECTRODE MATERIAL FOR SELF-BAKING ELECTRODE AND MANUFACTURING METHOD THEREOF**

(30) Priority: 13.12.2023 KR 20230180427
(71) Applicant: POSCO Co., Ltd, Gyeongsangbuk-do 37859 (KR)
(72) Inventor: KANG, Dongsu, Pohang-si, Gyeongsangbuk-do 37571 (KR); KIM, Yongin, Pohang-si, Gyeongsangbuk-do 37834 (KR); PARK, Jaehoon, Gwangju 61706 (KR); LEE, Sangbeom, Pohang-si, Gyeongsangbuk-do 37671 (KR); PARK, Sangchae, Pohang-si, Gyeongsangbuk-do 37667 (KR); LEE, Sangdong, Gwangyang-si, Jeollanam-do 57747 (KR); CHOI, Jinseok, Pohang-si, Gyeongsangbuk-do 37675 (KR)
(74) Representative: Meissner Bolte Partnerschaft mbB
(86) International application number: PCT/KR2024/019922
(87) International publication number: WO 2025/127619

(57) **Abstract**

Disclosed are an electrode material for a self-baking electrode and a manufacturing method therefor. A method for manufacturing an electrode material for a self-baking electrode according to an embodiment may include: preparing an aggregate containing carbon as a main component; coating an oxidation inhibitor on a surface and internal pores of the prepared aggregate; mixing the oxidation-inhibitor-treated aggregate with a binder pitch; and molding a mixture, in which the carbon aggregate and the binder pitch are mixed, into a predetermined shape.

## Description

### [Technical Field]

The present disclosure relates to an electrode material used for a self-baking electrode and a manufacturing method thereof.

### [Background Art]

Submerged Arc Furnaces (SAF) electric furnaces, which are widely used for ferroalloy production, operate by applying electricity to carbon electrodes to generate a large amount of heat-plasma heat, thereby melting raw materials for production.

In addition, in the SAF electrode, an electrode material is input, and the electrode material is melted, filled by its own load, and self-baked(sintered/fired) during use to serve as an electrode rod.

Since such an electrode can be self-baked and continuously operated, it can be viewed as a self-baking continuous electrode type, and a Soderberg type, which is a completely self-baking type in which a case is prepared of an iron plate or the like, is representative.

Meanwhile, an electrode composed mostly of carbon substances is continuously oxidized and consumed during the operation of the electric furnace. In particular, like the SAF electrode, the periphery thereof is exposed to high temperatures radiating from a melt surface, and the degree of oxidation may be further increased by air introduced into the electric furnace from the outside or oxygen contained in a reaction gas inside the electric furnace.

The diameter of the electrode becomes thinner due to the oxidation reaction, and this phenomenon is referred to as penciling. The electrode having a thinned diameter has a high fear of breakage due to a decrease in cross-sectional strength, and an area for generating an arc decreases, which may reduce the operation efficiency of the electric furnace.

Therefore, in recent years, a technology of forming an insulating layer on the surface of the electrode has been used to prevent oxidation.

However, since the insulating layer formed on the surface of the electrode may act as a factor hindering the movement of an arc current applied to the surface of the electrode, it may cause trouble in the operation of the arc furnace.

In addition, in the case of an electrode in which the insulating layer is formed only on the surface, if the insulating layer on the surface is damaged, a problem may occur in that the oxidation of the electrode can no longer be prevented.

### [Disclosure]

### [Technical Problem]

An aspect of the present disclosure provides an electrode material for a self-baking electrode capable of effectively extending the life of an electrode, and a manufacturing method therefor.

An aspect of the present disclosure provides an electrode material for a self-baking electrode capable of ensuring a stable operation of an electric furnace, and a manufacturing method therefor.

### [Technical Solution]

A method for manufacturing an electrode material for a self-baking electrode according to the spirit of the present disclosurecomprises: a preparation step of preparing an aggregate containing carbon as a main component; an oxidation-inhibiting treatment step of coating an oxidation inhibitor (oxidation-preventing agent; hereinafter also referred to as "antioxidant") on a surface and internal pores of the prepared aggregate; a mixing step of mixing the oxidation-inhibitor-treated aggregate with a binder pitch; and a molding step of molding a mixture, in which the carbon aggregate and the binder pitch are mixed, into a predetermined shape.

The oxidation-inhibiting treatment step may include: an immersion step of immersing calcined anthracite forming the aggregate in a sodium silicate aqueous solution; an impregnation step of impregnating the calcined anthracite with the sodium silicate aqueous solution; and a drying step of recovering the calcined anthracite impregnated with the sodium silicate aqueous solution and drying the calcined anthracite to remove moisture.

The impregnation step may include: a decompression step of decompressing the sodium silicate aqueous solution, in which the calcined anthracite is immersed, under a decompression atmosphere less than atmospheric pressure; and a pressurization step of pressurizing the sodium silicate aqueous solution, in which the calcined anthracite is immersed, under a pressurization atmosphere equal to or higher than atmospheric pressure after the decompression step.

In the decompression step, the sodium silicate aqueous solution in which the calcined anthracite is immersed may be decompressed in a decompression atmosphere of 2 to 10 torr for 50 to 70 minutes.

In the pressurization step, the sodium silicate aqueous solution in which the calcined anthracite is immersed may be pressurized in a pressurization atmosphere of 9 to 11 bar for 25 to 35 minutes.

An electrode material for a self-baking electrode according to the spirit of the present disclosure may be manufactured by the method for manufacturing an electrode material for a self-baking electrode.

### [Advantageous Effects]

According to the present disclosure, it is possible to provide an electrode material for a self-baking electrode capable of effectively extending the life of an electrode, and a manufacturing method therefor.

In addition, according to the present disclosure, it is possible to provide an electrode material for a self-baking electrode capable of ensuring a stable operation of an electric furnace, and a manufacturing method therefor.

### [Description of Drawings]

FIG. 1 is a process chart of a method for manufacturing an electrode material for a self-baking electrode according to an embodiment.
FIG. 2 shows calcined anthracite and a sodium silicate aqueous solution used in the method for manufacturing an electrode material for a self-baking electrode according to an embodiment.
FIG. 3 shows a comparison of oxidation test results of an electrode material manufactured by the method for manufacturing an electrode material for a self-baking electrode according to an embodiment and a general electrode material.

### [Mode for Invention]

Throughout the specification, the same reference numerals refer to the same components. The present specification does not describe all elements of the embodiments, and general contents in the technical field to which the present invention belongs or overlapping contents between the embodiments are omitted. The terms 'part, module, member, block' used in the specification may be implemented as software or hardware, and according to embodiments, a plurality of 'parts, modules, members, blocks' may be implemented as a single component, or a single 'part, module, member, block' may include a plurality of components.

Throughout the specification, when a part is "connected" to another part, this includes not only a case where they are directly connected but also a case where they are indirectly connected, and the indirect connection includes a connection through a wireless communication network.

In addition, when a part "includes" a certain component, this means that it may further include other components, rather than excluding other components, unless specifically stated to the contrary.

Throughout the specification, when a member is located "on" another member, this includes not only a case where a member is in contact with another member but also a case where another member exists between the two members.

Terms such as first and second are used to distinguish one component from another component, and the component is not limited by the above-described terms.

Singular expressions include plural expressions unless the context clearly indicates otherwise.

In each step, identification codes are used for convenience of description, and the identification codes do not describe the order of each step, and each step may be performed differently from the specified order unless the context clearly states a specific order.

The term "and/or" includes any combination of a plurality of related listed items or any of a plurality of related listed items.

Hereinafter, the operating principle and embodiments of the present invention will be described with reference to the accompanying drawings.

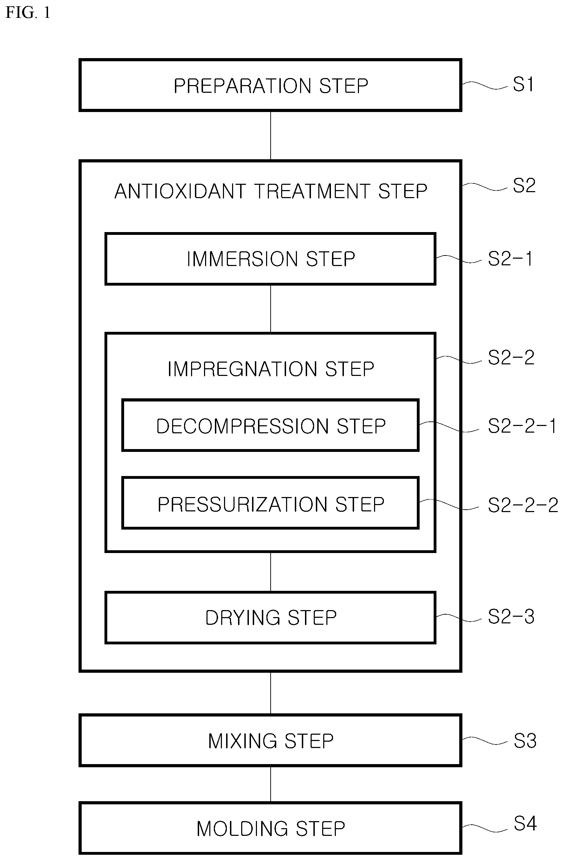

FIG. 1 is a process chart of a method for manufacturing an electrode material for a self-baking electrode according to an embodiment.

As shown in FIG. 1, the method for manufacturing an electrode material for forming a self-baking electrode may include a preparation step (S1), an oxidation-inhibiting treatment step (S2), a mixing step (S3), and a molding step (S4).

In the preparation step (S1), an aggregate containing carbon as a main component may be prepared. The aggregate may be prepared as calcined anthracite. The calcined anthracite may be prepared by baking anthracite at 2500°C to remove moisture and volatile matter. The calcined anthracite may be prepared by classifying to have a particle size distribution of 5 to 10 mm. The calcined anthracite baked to remove moisture and volatile matter may have improved density and electrical conductivity and enhanced oxidation resistance. The particle size distribution of the calcined anthracite may be an important factor determining the strength of a molded body later.

In the oxidation-inhibiting treatment step (S2), an oxidation inhibitor may be coated on a surface and internal pores of the aggregate prepared in the preparation step (S1). The electrode material manufactured through the oxidation-inhibitor-treated aggregate as described above maintains a state in which the oxidation inhibitor is strongly coated not only between particles but also inside the pores of the particles, thereby blocking the oxidation action from extending inward from the oxidized surface even when a part of the surface is oxidized. A process in which the oxidation inhibitor is coated to the inside of the pores will be described later.

Therefore, an electrode manufactured through such an electrode material prevents or suppresses oxidation of the electrode in a high-temperature atmosphere inside the electric furnace, and reduces consumption of the electrode due to oxidation prevention, thereby extending the service life of the self-baking electrode.

In the mixing step (S3), the oxidation-inhibitor-treated calcined anthracite may be mixed with a binder pitch. In the mixing step (S3), the aggregate and the binder pitch may be kneaded in a high-temperature atmosphere.

In the molding step (S4), a mixture in which the calcined anthracite and the binder pitch are mixed may be put into a mold and molded to form a molded body of a predetermined shape. As the molding step (S4) is completed, the manufacturing process of the electrode material may be completed.

The electrode material manufactured as described above may be put into a case to be used as a self-baking electrode in an electric furnace. The position of the case may be adjusted while ascending and descending, and the electrode material corresponds to the descending operation of the case and is self-baked(sintered/fired) due to heat generated in the electric furnace during operation and its own load to perform the role of an electrode rod. At this time, the binder pitch of the electrode material may be carbonized to form carbon. As described above, since the binder pitch is evenly mixed with the oxidation-inhibitor-treated aggregate in the mixing step (S3) and is evenly distributed on the surface of the electrode material, carbon can be evenly distributed on the surface of the electrode during the self-baking(sintering/firing) process.

Therefore, the electrode material suppresses or prevents the oxidation action of the electrode through the oxidation-inhibitor-treated aggregate while facilitating the movement of the arc current by the surface of the electrode, thereby ensuring a stable operation of the electric furnace.

Next, the oxidation-inhibiting treatment step (S2) of coating the oxidation inhibitor on the surface and internal pores of the aggregate will be described in more detail.

The oxidation-inhibiting treatment step (S2) may include an immersion step (S2-1), an impregnation step (S2-2), and a drying step (S2-3).

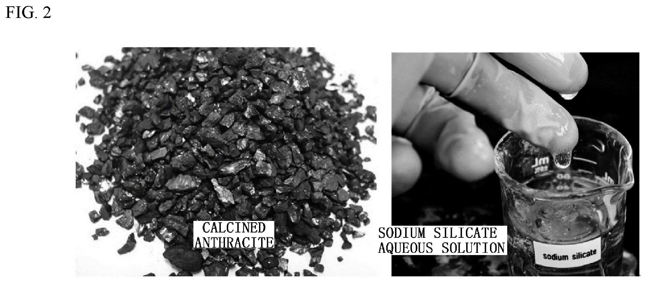

In the immersion step (S2-1), as shown in FIG. 2, the calcined anthracite may be immersed in a sodium silicate aqueous solution in a state where the calcined anthracite forming the carbon aggregate and the sodium silicate aqueous solution are prepared. Sodium silicate is a sodium salt of silicic acid. As the sodium silicate aqueous solution, various aqueous solutions may be used within a range including silicic acid.

In the impregnation step (S2-2), the calcined anthracite is impregnated with the sodium silicate aqueous solution, and in the drying step (S2-3), the calcined anthracite impregnated with the sodium silicate aqueous solution may be recovered and dried to remove moisture.

The impregnation step (S2-2) may include a decompression step (S2-2-1) of decompressing the sodium silicate aqueous solution, in which the calcined anthracite is immersed, under a decompression atmosphere less than atmospheric pressure, and a pressurization step (S2-2-2) of pressurizing the sodium silicate aqueous solution, in which the calcined anthracite is immersed, under a pressurization atmosphere equal to or higher than atmospheric pressure after the decompression step (S2-2-1).

In the decompression step (S2-2-1), the sodium silicate aqueous solution in which the calcined anthracite is immersed may be charged into a chamber of a vacuum impregnator, and the vacuum impregnator may be operated such that the inside of the chamber forms a decompression atmosphere close to a vacuum state.

In such a decompression atmosphere, gas existing in the pores of the calcined anthracite expands and moves to the outside, thereby providing a site where the sodium silicate aqueous solution can be impregnated in the pores of the calcined anthracite.

In the decompression step, the sodium silicate aqueous solution in which the calcined anthracite is immersed may be decompressed for 50 to 70 minutes in a decompression atmosphere of 2 to 10 torr, which becomes a state substantially close to a vacuum.

At this time, in the case of the decompression atmosphere, it may be substantially difficult to realize less than 2 torr. In addition, when the decompression atmosphere is greater than 10 torr or the decompression time is less than 50 minutes, it may be difficult to sufficiently secure the mobility of the gas inside the pores. Also, the decompression time may be maximized at about 70 minutes, and if it exceeds 60 minutes, energy waste due to decompression may be caused.

In the pressurization step (S2-2-2), the vacuum impregnator is operated such that the inside of the chamber forms a pressurization atmosphere equal to or higher than atmospheric pressure so that the sodium silicate aqueous solution in which the calcined anthracite is immersed is pressurized in the pressurization atmosphere.

When the pressurization atmosphere is created in this way, the sodium silicate aqueous solution impregnation liquid penetrates into the pores of the calcined anthracite, which are empty after the gas has escaped, due to the pressure difference until the pressure is constant, and accordingly, the sodium silicate aqueous solution can be impregnated into the surface and internal pores of the calcined anthracite.

In the pressurization step (S2-2-2), the sodium silicate aqueous solution in which the calcined anthracite is immersed may be pressurized in a pressurization atmosphere of 9 to 11 bar for 25 to 35 minutes.

At this time, when the pressurization atmosphere is less than 9 bar or the pressurization time is less than 25 minutes, the sodium silicate aqueous solution may not be completely impregnated into the pores of the calcined anthracite. Also, when the pressurization atmosphere exceeds 11 bar or the pressurization time exceeds 35 minutes, it is difficult to further increase the impregnation rate, which may cause energy waste due to pressurization.

And in the drying step (S2-3), the calcined anthracite in a state where the impregnation of the sodium silicate aqueous solution is completed is recovered from the sodium silicate aqueous solution and dried to remove moisture from the calcined anthracite.

The drying step (S2-3) proceeds with the calcined anthracite under a temperature condition of 140 to 160°C for 25 to 35 minutes so that moisture contained in the calcined anthracite can be quickly removed over a short time.

The conditions of the drying step (S2-3) are not limited to the above contents. The drying step (S2-3) may also proceed in a natural drying manner over several days within a range in which moisture contained in the calcined anthracite is completely removed.

Hereinafter, the present invention will be described in more detail through examples. However, the description of these examples is only for illustrating the implementation of the present invention, and the present invention is not limited by the description of these examples. This is because the scope of the rights of the present invention is determined by matters described in the claims and matters reasonably inferred therefrom.

### [Example]

In the preparation step (S1), calcined anthracite prepared by baking anthracite at 2500°C to remove moisture and volatile matter was classified and prepared to have a particle size distribution of 5 to 10 mm.

In the immersion step (S2-1) of the oxidation-inhibiting treatment step (S2), 1 kg of the prepared calcined anthracite was immersed in 10 L of a sodium silicate aqueous solution. In the decompression step (S2-2-1) of the impregnation step (S2-2), the sodium silicate aqueous solution in which the calcined anthracite was immersed was decompressed in a decompression atmosphere of 2 to 10 torr for 1 hour, and thereafter, in the pressurization step (S2-2-2) of the impregnation step (S2-2), it was pressurized in a pressurization atmosphere of 10 bar for 30 minutes. In the drying step (S2-3), the calcined anthracite impregnated with the sodium silicate aqueous solution was recovered from the sodium silicate aqueous solution and dried at 150°C for 30 minutes.

In the mixing step (S3) after the oxidation-inhibiting treatment step (S2), the oxidation-inhibitor-treated calcined anthracite was kneaded with a binder pitch, and the mixture kneaded in this way was molded using a mold in the molding step (S4).

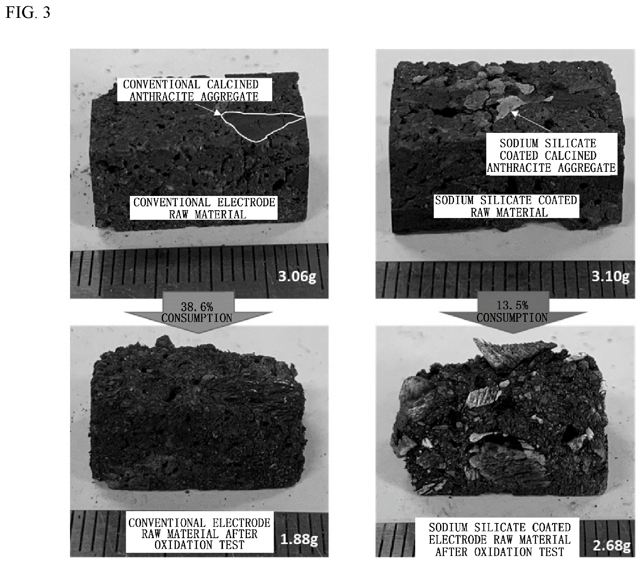

FIG. 3 compares and shows the oxidation test results of the electrode material (right) manufactured by the method for manufacturing an electrode material for a self-baking electrode according to the present embodiment and a general electrode material (left).

This test tested the oxidation of both electrode materials in a state where both electrode materials were exposed to the same conditions as the operating environment of the SAF electric furnace.

As shown in FIG. 3, it can be confirmed that the oxidation consumption (13.5%) of the electrode material according to the present embodiment coated with sodium silicate is significantly less than the oxidation consumption (38.6%) of the general electrode material not coated with sodium silicate.

Although exemplary embodiments of the present invention have been described above, the present invention is not limited thereto, and those skilled in the art will understand that various changes and modifications are possible within the scope without departing from the concept and scope of the claims described below.

## Claims

1. A method for manufacturing an electrode material for a self-baking electrode, comprising:
preparing an aggregate containing carbon as a main component;
coating an oxidation inhibitor on a surface and internal pores of the prepared aggregate;
mixing the oxidation-inhibitor-treated aggregate with a binder pitch; and
molding a mixture, in which the carbon aggregate and the binder pitch are mixed, into a predetermined shape.

2. The method according to claim 1, wherein the coating of the oxidation inhibitor comprises:
immersing calcined anthracite forming the aggregate in a sodium silicate aqueous solution;
impregnating the calcined anthracite with the sodium silicate aqueous solution; and
recovering the calcined anthracite impregnated with the sodium silicate aqueous solution and drying the calcined anthracite to remove moisture.

3. The method according to claim 2, wherein the impregnating comprises:
decompressing the sodium silicate aqueous solution, in which the calcined anthracite is immersed, under a decompression atmosphere less than atmospheric pressure; and
pressurizing the sodium silicate aqueous solution, in which the calcined anthracite is immersed, under a pressurization atmosphere equal to or higher than atmospheric pressure after the decompressing.

4. The method according to claim 3, wherein, in the decompressing, the sodium silicate aqueous solution in which the calcined anthracite is immersed is decompressed in a decompression atmosphere of 2 to 10 torr for 50 to 70 minutes.

5. The method according to claim 3, wherein, in the pressurizing, the sodium silicate aqueous solution in which the calcined anthracite is immersed is pressurized in a pressurization atmosphere of 9 to 11 bar for 25 to 35 minutes.

6. An electrode material for a self-baking electrode manufactured by the method for manufacturing an electrode material for a self-baking electrode according to any one of claims 1 to 5.
